# EUROPEAN PATENT SPECIFICATION

(11) **EP 3 757 970 B1**
(45) Date of publication and mention of the grant of the patent: **09.09.2026**
(21) Application number: 20172645.2
(22) Date of filing: 04.05.2020
(51) Int. Cl.: G08G 5/00

(54) **METHODS AND SYSTEMS FOR AUTHENTICATING AN AUTOMATIC DEPENDENT SURVEILLANCE-BROADCAST (ADS-B) SIGNAL**
VERFAHREN UND SYSTEME ZUR AUTHENTIFIZIERUNG EINES AUTOMATISCH ABHÄNGIGEN ÜBERWACHUNGSRUNDFUNK(ADS-B)-SIGNALS
PROCÉDÉS ET SYSTÈMES D'AUTHENTIFICATION D'UN SIGNAL AUTOMATIQUE DE DIFFUSION DE SURVEILLANCE DÉPENDANTE (ADS-B)

(30) Priority: 28.06.2019 US 201916457319
(43) Date of publication of application: 30.12.2020
(73) Proprietor: The Boeing Company, Arlington, VA 22202 (US)
(72) Inventor: BUSH, John E., Chicago, IL 60606-1596 (US)
(74) Representative: Plasseraud IP

(56) References cited:
- EP-A1- 3 483 860
- US-A1- 2006 119 515
- US-A1- 2012 041 620
- US-A1- 2018 172 797

## Description

### BACKGROUND

The present disclosure generally relates to systems and methods for signal authentication, and more specifically to systems and methods for authenticating an Automatic Dependent Surveillance-Broadcast (ADS-B) Signal. ADS-B is an aircraft tracking technology in which an aircraft periodically broadcasts its identification, altitude, velocity, and position determined via the Global Positioning System (GPS) protocol. Air traffic control stations on the ground and other aircraft can receive and use the broadcasted information to coordinate the flight of many aircraft and help prevent mid-air collisions.

One disadvantage of the ADS-B system is that it does not include a protocol for authenticating received signals. That is, a premise of the system is that the aircraft identification and the corresponding altitude, position, and velocity conveyed by a received signal are accurate. Thus, there is a degree of uncertainty regarding the content of ADS-B messages. This issue particularly applies to unmanned aerial vehicles (UAVs) equipped with an ADS-B system because UAVs do not have a pilot onboard that could use his or her own vision or hearing to verify the information included in a received ADS-B signal. Thus, a need exists for systems and methods that can authenticate ADS-B signals. US2006/119515, according to its abstract, relates to a system wherein security of ADS-B transmissions is improved to detect position spoofing. The annunciated position source may then be compared with the derived source and a determination is made regarding the difference between the results. Any position difference greater than an amount significantly greater than the combination of the error sources is then a cause for concern and can be used to generate an alert. In a second embodiment, alerting may be based on identification spoofing. From these sources a correlated ID is available which will have an associated confidence based on the number of sources and the level of agreement on the information. Aircraft dynamics may be correlated with the announced ID for consistency. A priori information on the aircraft and location, such as schedule information, and normal operations, may be used to assist in the confidence of aircraft identity. In a third embodiment, alerting may be based on spoofing of identity and position. US2018/172797, according to its abstract, relates to a method and a base station for validating information regarding the position of a target-aircraft, the information contained in an ADS-B signal periodically broadcast by the target-aircraft, with the method being executed in the ADS-B base station.

### SUMMARY

One aspect of the disclosure is a computing system according to claim 1.

A further aspect of the disclosure is a method according to claim 11. A third aspect provides a computer readable medium according to claim 15.

By the term "about" or "substantially" with reference to amounts or measurement values described herein, it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

The features, functions, and advantages that have been discussed can be achieved independently in various examples or may be combined in yet other examples further details of which can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and descriptions thereof, will best be understood by reference to the following detailed description of an illustrative example of the present disclosure when read in conjunction with the accompanying Figures.
Figure 1 is a schematic diagram of a host aircraft and a computing system, according to an example.
Figure 2 is a schematic diagram of aircraft and functionality performed by a computing system, according to an example.
Figure 3 is a block diagram of a method, according to an example.
Figure 4 is a block diagram of a method, according to an example.
Figure 5 is a block diagram of a method, according to an example.
Figure 6 is a block diagram of a method, according to an example.
Figure 7 is a block diagram of a method, according to an example.
Figure 8 is a block diagram of a method, according to an example.
Figure 9 is a block diagram of a method, according to an example.
Figure 10 is a block diagram of a method, according to an example.
Figure 11 is a block diagram of a method, according to an example.

### DETAILED DESCRIPTION

As discussed above, there exists a need for systems and methods that can authenticate ADS-B signals. Accordingly, this disclosure includes such systems and methods.

Within examples, a computing system aboard a host aircraft can receive, at a first time, a first authenticated signal that (i) identifies a first position of a first aircraft relative to the host aircraft and (ii) includes a first identifier of the first aircraft. For example, the first authenticated signal could be received via an encrypted communication channel *(e.g.,* other than ADS-B) or could be authenticated by comparing the information conveyed by the first authenticated signal to air traffic control information or other verified information. The first authenticated signal can include a call sign of the first aircraft (*e.g*., any alphanumeric identifier), an altitude of the first aircraft, a bearing of the first aircraft relative to the host aircraft, and a distance between the first aircraft and the host aircraft. Any information conveyed by the first authenticated signal can be explicit or implicit.

The computing system can also receive, at a subsequent time, a second signal that is an ADS-B signal that identifies a second position, a velocity, and an aircraft type. The second signal also includes a second identifier (*e.g*., any alphanumeric identifier). Any information conveyed by the second signal can be explicit or implicit. Next, the computing system can match the first identifier and the second identifier such that the second signal corresponds to the first aircraft.

The computing system can then use the first position indicated by the first authenticated signal and the aircraft type indicated by the second signal to confirm that it is possible that the first aircraft is located at the second position indicated by the second signal moving at the velocity indicated by the second signal at the subsequent time. For example, the computing system can determine, based on known performance specifications of the aircraft type (*e.g.,* a particular make and model of an aircraft), whether it is possible that the first aircraft was at the first position at the first time when the first authenticated signal was received and also traveling at the second position at the velocity indicated by the second signal at the subsequent time. In some examples, the computing system can infer the aircraft type of the first aircraft from the first identifier or the second identifier. Such performance specifications can include a maximum velocity, a minimum velocity, or a maximum altitude. The computing system can also determine whether the aforementioned position and velocity information is consistent with a known flight plan of the first aircraft. Based on a confirmation that it is possible that the first aircraft is located at the second position moving at the velocity at the subsequent time, the computing system can provide (*e.g*., via a user interface) an indication that the second signal is authentic.

In some examples, the computing system can additionally receive a third signal that is an ADS-B signal explicitly or implicitly identifying a third position, a second velocity, a second aircraft type, and a third identifier. The computing system can identify a mismatch between the first identifier and the third identifier such that the third signal corresponds to a second aircraft (*e.g.,* a new contact). Using the third position, the second velocity, and/or the second aircraft type, the computing system can confirm that it is possible that the second aircraft is located at the third position moving at the second velocity at the second time and provide an indication to that effect (*e.g.,* via the user interface). For example, the computing system can determine that a distance between the host aircraft and the third position is greater than a standard initial contact distance of ADS-B signals (*e.g.,* a distance at which a new contact would be expected to "appear" via ADS-B tracking).

The systems and methods disclosed herein can be advantageous because, when compared to conventional systems and methods, the systems and methods disclosed herein can help to authenticate ADS-B signals and identify fraudulent ADS-B signals.

Implementations of this disclosure provide technological improvements that are particular to computer networks and computing systems, for example, computing systems used to authenticate radio transmissions and/or identify fraudulent radio transmissions.

Computing system-specific technological problems, such as the management and use of large quantities of complex data stemming from multiple sources such as aircraft and air traffic control stations, as well as inefficiency associated therewith, can be wholly or partially solved by the implementations of this disclosure. For example, implementation of this disclosure can reduce time spent analyzing data to identify authentic signals and fraudulent signals. Thus, implementation of this disclosure can reduce the cost and complexity of implementing less efficient methods and systems for diagnosing and resolving such problems. As another example, implementation of this disclosure increases accuracy and reliability of diagnostic information.

Implementations of this disclosure can thus introduce new and efficient improvements in the ways in which a computing system authenticates radio transmissions, and in turn facilitate new and efficient improvements in the ways in which the associated data is used to diagnose and resolve problems. Implementations of this disclosure can condense and perform calculations with large amounts of information that might not otherwise be easily usable to authenticate radio transmissions.

Disclosed examples will now be described more fully hereinafter with reference to the accompanying Drawings, in which some, but not all of the disclosed examples are shown. Indeed, several different examples may be described and should not be construed as limited to the examples set forth herein. Rather, these examples are described so that this disclosure will be thorough and complete and will fully convey the scope of the disclosure to those skilled in the art.

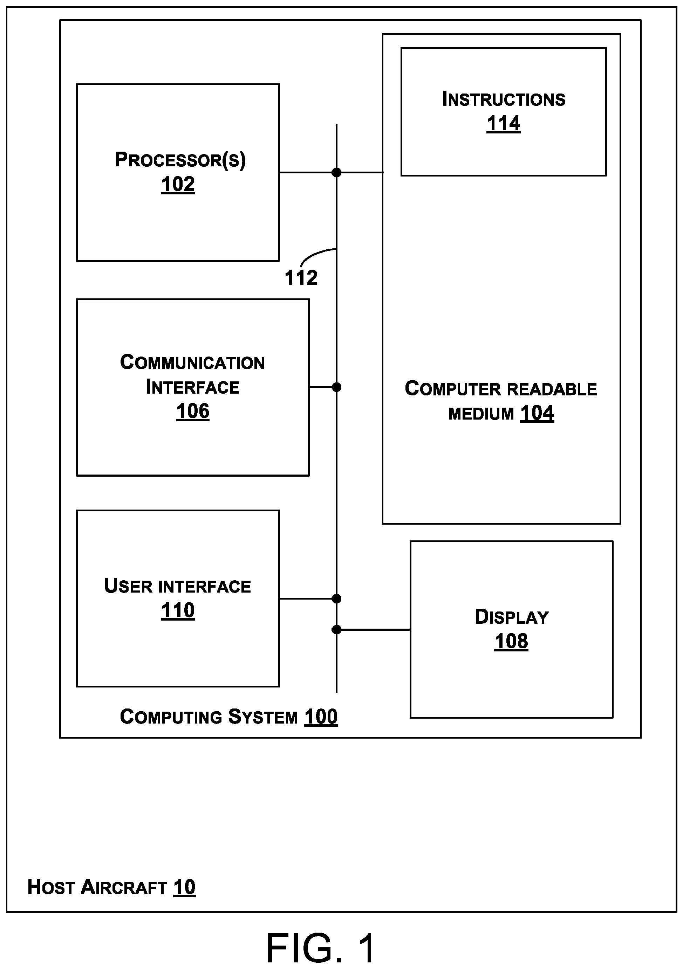

Figure 1 is a block diagram of a host aircraft 10, which includes a computing system 100. In some examples, components of the computing system 100 are distributed across multiple computing systems. However, for the sake of example, the components are shown and described as part of the computing system 100. The computing system 100 can be or include a mobile device (such as a mobile phone), a desktop computer, a laptop computer, a tablet computer, a server, a network of multiple servers, or one or more similar devices that can be configured to perform the functions described herein.

As shown in Figure 1, the computing system 100 includes one or more processors 102, a non-transitory computer readable medium 104, a communication interface 106, a display 108, and a user interface 110. Components of the computing system 100 illustrated in Figure 1 are linked together by a system bus, network, or other connection mechanism 112.

The one or more processors 102 can be any type of processor(s), such as a microprocessor, a digital signal processor, a multicore processor, etc., coupled to the non-transitory computer readable medium 104.

The non-transitory computer readable medium 104 can be any type of memory, such as volatile memory like random access memory (RAM), dynamic random access memory (DRAM), static random access memory (SRAM), or non-volatile memory like read-only memory (ROM), flash memory, magnetic or optical disks, or compact-disc read-only memory (CD-ROM), among other devices used to store data or programs on a temporary or permanent basis.

Additionally, the non-transitory computer readable medium 104 can be configured to store instructions 114. The instructions 114 are executable by the one or more processors 102 to cause the computing system 100 to perform any of the functions of the computing system 100 described herein.

The communication interface 106 can include hardware to enable communication within the computing system 100 and/or between the computing system 100 and one or more other devices. The hardware can include transmitters, receivers, and antennas, for example. The communication interface 106 can be configured to facilitate communication with one or more other devices, in accordance with one or more wired or wireless communication protocols. For example, the communication interface 106 can be configured to facilitate wireless data communication for the computing system 100 according to one or more wireless communication standards, such as one or more Institute of Electrical and Electronics Engineers (IEEE) 801.11 standards, ZigBee standards, Bluetooth standards, etc. As another example, the communication interface 106 can be configured to facilitate wired data communication with one or more other devices.

The display 108 can be any type of display component configured to display data. As one example, the display 108 can include a touchscreen display. As another example, the display 108 can include a flat-panel display, such as a liquid-crystal display (LCD) or a light-emitting diode (LED) display.

The user interface 110 can include one or more pieces of hardware used to provide data and control signals to the computing system 100. For instance, the user interface 110 can include a mouse or a pointing device, a keyboard or a keypad, a microphone, a touchpad, or a touchscreen, among other possible types of user input devices. Generally, the user interface 110 can enable an operator to interact with a graphical user interface (GUI) provided by the computing system 100 (*e.g*., displayed by the display 108).

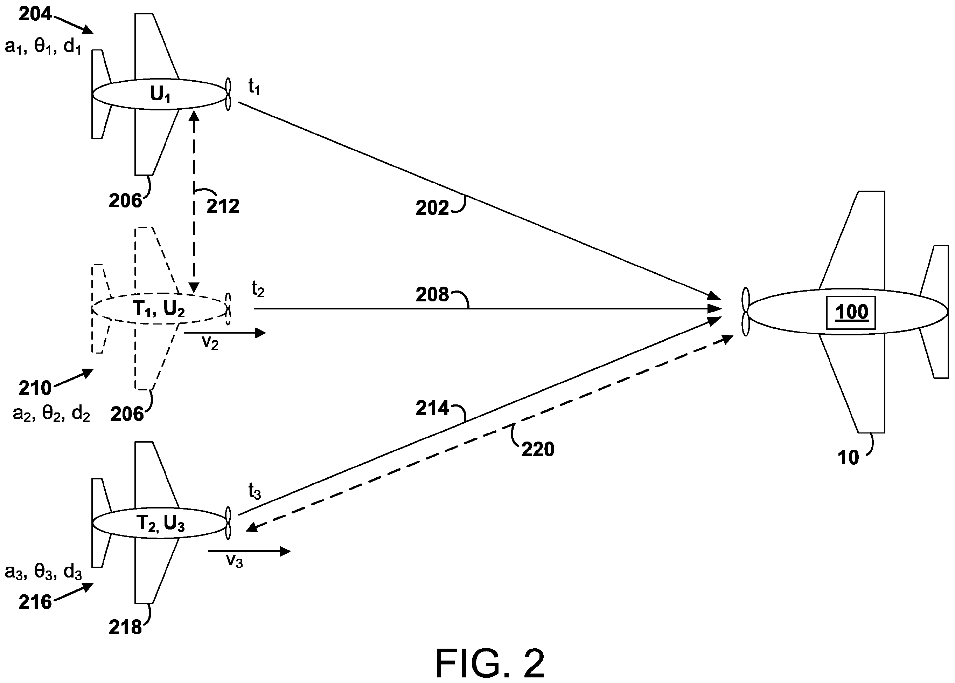

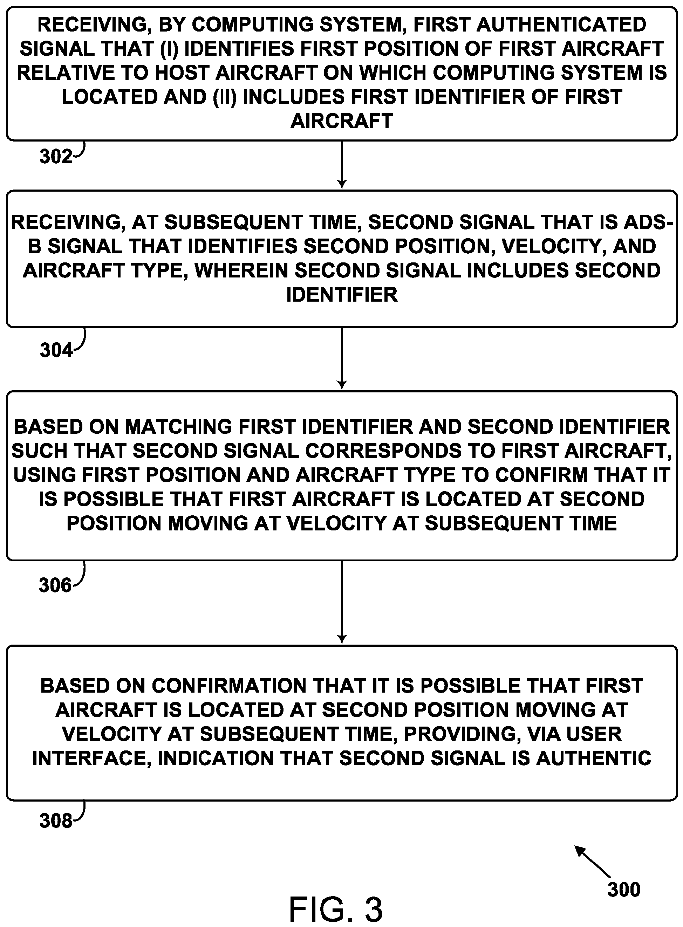

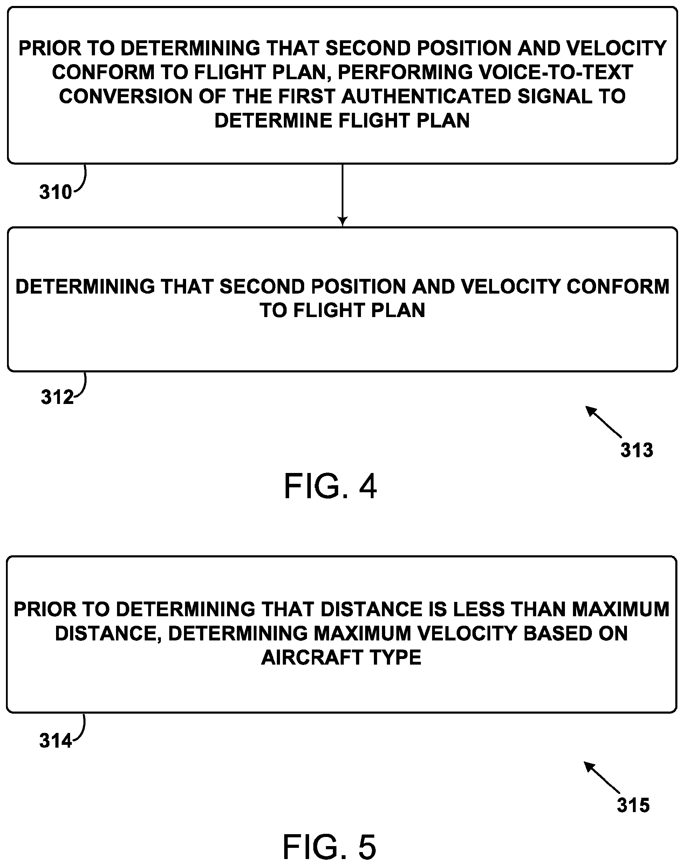

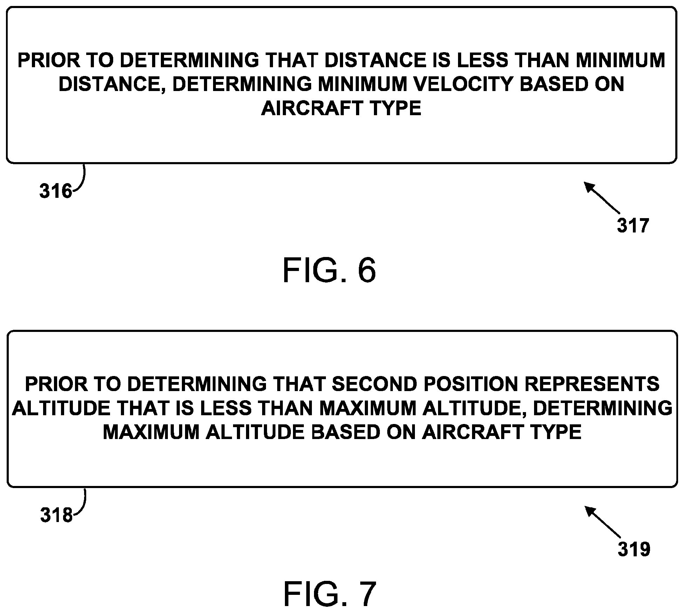

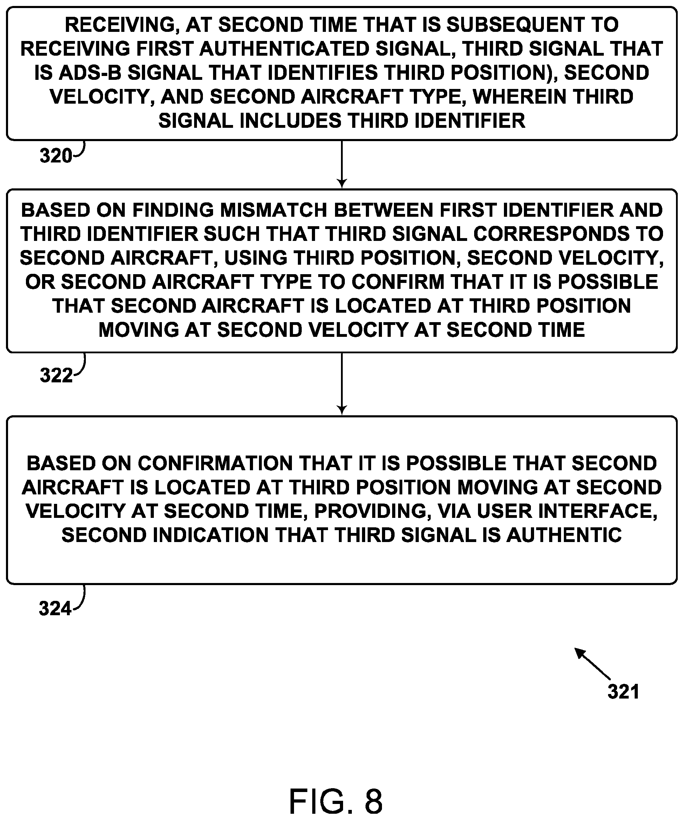

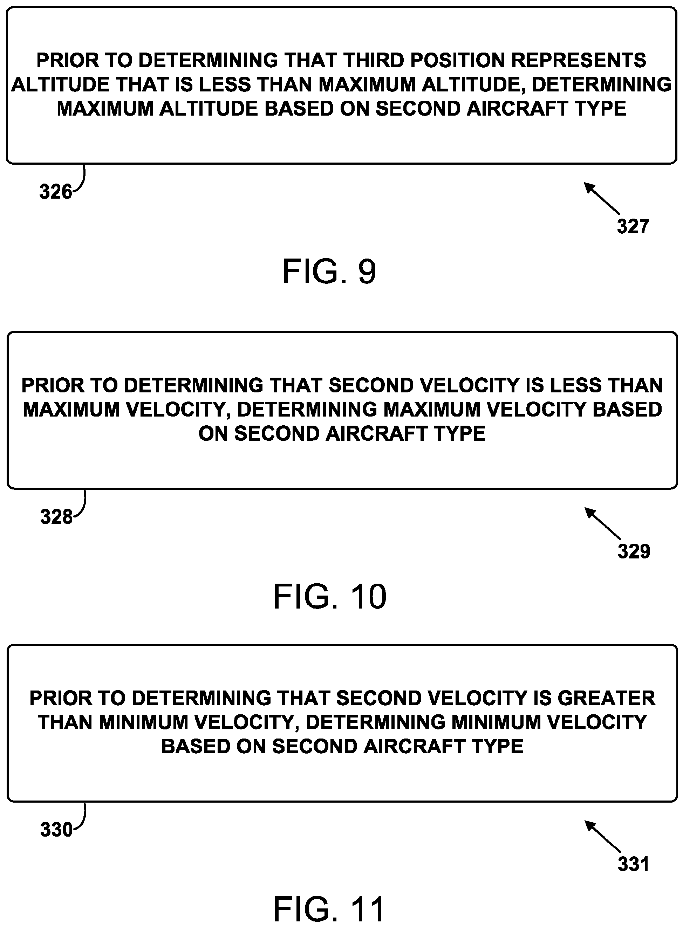

Figure 2 further depicts the host aircraft 10, the computing system 100, and functionality related to the method 300 shown in Figure 3, the method 313 shown in Figure 4, the method 315 shown in Figure 5, the method 317 shown in Figure 6, the method 319 shown in Figure 7, the method 321 shown in Figure 8, the method 327 shown in Figure 9, the method 329 shown in Figure 10, and the method 331 shown in Figure 11.

As shown in Figure 2, the computing system 100 receives (*e.g*., wirelessly from a first aircraft 206 at a first time t₁) a first authenticated signal 202 that (i) identifies a first position 204 of the first aircraft 206 relative to the host aircraft 10 on which the computing system 100 is located and (ii) includes a first identifier U₁ of the first aircraft 206. In other examples, the computing system can receive the first authenticated signal from an air traffic control station. The first position 204 is characterized by an altitude a₁, a bearing θ₁ expressed from a perspective of the host aircraft 10, and a distance d₁ from the host aircraft 10, but other examples of quantifying the first position are possible.

The first authenticated signal 202 could be received via an encrypted communication channel (*e.g.,* other than ADS-B) or could be authenticated by comparing the information conveyed by the first authenticated signal 202 to air traffic control information or other verified information. The first identifier U₁ could include a call sign of the first aircraft 206 (*e.g.,* any alphanumeric identifier). Any information conveyed by the first authenticated signal 202 can be explicit or implicit. In some examples, the first authenticated signal 202 is a Traffic Collision Avoidance System (TCAS) signal received from the first aircraft 206. In other examples, the first authenticated signal is an air traffic control voice (ATCV) signal that encodes air traffic control audio, or a Controller Pilot Data Link (CPDL) signal. ATCV signals and CPDL signals are generally received from an air traffic control station.

The computing system 100 also receives (*e.g*., wirelessly), at a subsequent time t₂, a second signal 208 that is an ADS-B signal that identifies a second position 210, a velocity v₂, and an aircraft type T₁. The second signal 208 includes a second identifier U₂ (*e.g.,* any alphanumeric identifier). Any information conveyed by the second signal 208 can be explicit or implicit. The second position 210 is characterized by an altitude a₂, a bearing θ₂ from the perspective of the host aircraft 10, and a distance d₂ from the host aircraft 10, but other examples of quantifying the second position are possible. Next, the computing system 100 can match the first identifier U₁ and the second identifier U₂ such that the second signal 208 corresponds to the first aircraft 206. That is, the computing system 100 determines that the subsequently received second signal 208 corresponds to the same aircraft as the first authenticated signal 202, namely the first aircraft 206.

Based on matching the first identifier U₁ and the second identifier U₂ such that the second signal 208 corresponds to the first aircraft 206, the computing system 100 uses the first position 204 and the aircraft type T₁ (*e.g.,* a particular make and model of an aircraft) to confirm that it is possible that the first aircraft 206 is located at the second position 210 moving at the velocity v₂ at the subsequent time t₂.

For example, the computing system 100 can determine, based on known performance specifications of the aircraft type T₁, whether it is possible that the first aircraft 206 was at the first position 204 at the first time t₁ when the first authenticated signal 202 was received and also traveling at the second position 210 at the velocity v₂ indicated by the second signal 208 at the subsequent time t₂. In some examples, the computing system 100 can infer the aircraft type T₁ of the first aircraft 206 from the first identifier U₁ or the second identifier U₂ (*e.g.,* via a lookup table). Such performance specifications can include a maximum velocity, a minimum velocity, or a maximum altitude. The computing system 100 can also determine whether the aforementioned position and velocity information is consistent with a known flight plan of the first aircraft 206.

Thus, in some examples, the first authenticated signal is an air traffic control voice (ATCV) signal or a Controller Pilot Data Link (CPDL) signal (*e.g*., received from an air traffic control station) that indicates a flight plan of the first aircraft 206. In this context, the computing system 100 can determine that the second position 210 and the velocity v₂ conform to the flight plan (*e.g.,* that the second position 210 and the velocity v₂ are within position and velocity limits defined by the flight plan.)

In some examples, the first authenticated signal is an ATCV signal. In this context, the computing system 100 can, prior to determining that the second position 210 and the velocity v₂ conform to the flight plan, perform voice-to-text conversion of the first authenticated signal to determine the flight plan of the first aircraft 206.

In some examples, the computing system 100 using the first position 204 and the aircraft type T₁ to confirm that it is possible that the first aircraft 206 is located at the second position 210 moving at the velocity v₂ at the subsequent time t₂ includes determining that a distance 212 between the first position 204 and the second position 210 is less than a maximum distance that the first aircraft 206 could have travelled at a maximum velocity of the aircraft type T₁ between the first time t₁ and the subsequent time t₂. Prior to determining that the distance 212 is less than the maximum distance, the computing system 100 can determine the maximum velocity based on the aircraft type T₁ (*e.g.,* via a lookup table).

In some examples, the computing system 100 using the first position 204 and the aircraft type T₁ to confirm that it is possible that the first aircraft 206 is located at the second position 210 moving at the velocity v₂ at the subsequent time t₂ includes determining that the distance 212 is more than a minimum distance that the first aircraft 206 could have travelled at a minimum velocity of the aircraft type T₁ between the first time t₁ and the subsequent time t₂. Prior to determining that the distance 212 is more than the minimum distance, the computing system 100 can determine the minimum velocity based on the aircraft type T₁ (*e.g.,* via a lookup table).

In some examples, the computing system 100 using the first position 204 and the aircraft type T₁ to confirm that it is possible that the first aircraft 206 is located at the second position 210 moving at the velocity v₂ at the subsequent time t₂ incudes determining that the second position 210 represents the altitude a₂ that is less than a maximum altitude of the aircraft type T₁. Prior to determining that the second position 210 represents the altitude a₂ that is less than the maximum altitude, the computing system 100 can determine the maximum altitude based on the aircraft type T₁ (*e.g.,* via a lookup table).

The computing system 100 can also, based on a confirmation that it is possible that the first aircraft 206 is located at the second position 210 moving at the velocity v₂ at the subsequent time t₂, provide (*e.g.,* via the user interface 110) an indication (*e.g.,* displayed text, an audio alert, etc.) that the second signal 208 is authentic.

In some examples, the indication provided by the computing system 100 can be less explicit in form, such as the computing system 100 controlling or maneuvering the host aircraft 10 based on the information included in the second signal 208 (*e.g*., based on an assumption that the first aircraft 206 is located at the second position 210 moving at the velocity v₂ at the subsequent time t₂). Additionally or alternatively, the indication provided by the computing system 100 can include the computing system 100 transmitting a signal (*e.g.,* to a control station on the ground) indicating that the second signal 208 is authentic. Such examples may be particularly relevant when the host aircraft 10 is a UAV.

In some examples, the computing system 100 can also receive, at a second time t₃ that is subsequent to receiving the first authenticated signal 202, a third signal 214 that is an ADS-B signal that identifies a third position 216, a second velocity v₃, and a second aircraft type T₂. The third signal 214 includes a third identifier U₃ (*e.g.,* any alphanumeric value).

Further, the computing system 100 can, based on finding a mismatch between the first identifier U₁ and the third identifier U₃ such that the third signal 214 corresponds to a second aircraft 218 that is distinct from the first aircraft 206, use the third position 216, the second velocity v₃, or the second aircraft type T₂ to confirm that it is possible that the second aircraft 218 is located at the third position 216 moving at the second velocity v₃ at the second time t₃. The computing system 100 can also, based on a confirmation that it is possible that the second aircraft 218 is located at the third position 216 moving at the second velocity v₃ at the second time t₃, provide (*e.g.,* via the user interface 110) a second indication (*e.g.,* displayed text, an audio alert, etc.) that the third signal 214 is authentic.

In some examples, the second indication provided by the computing system 100 can be less explicit in form, such as the computing system 100 controlling or maneuvering the host aircraft 10 based on the information included in the third signal 214 (*e.g.,* based on an assumption that the second aircraft 218 is located at the third position 216 moving at the second velocity v₃ at the second time t₃). Additionally or alternatively, the second indication provided by the computing system 100 can include the computing system 100 transmitting a signal (*e.g.,* to a control station on the ground) indicating that the third signal 214 is authentic. Such examples may be particularly relevant when the host aircraft 10 is a UAV.

In some examples, the computing system 100 using the third position 216, the second velocity v₃, or the second aircraft type T₂ to confirm that it is possible that the second aircraft 218 is located at the third position 216 moving at the second velocity v₃ at the second time t₃ includes determining that the third position 216 represents an altitude a₃ that is less than a maximum altitude of the second aircraft type T₂. The computing system 100 can also, prior to determining that the third position 216 represents the altitude a₃ that is less than the maximum altitude, determine the maximum altitude based on the second aircraft type T₂ (*e.g.,* via a lookup table).

In some examples, the computing system 100 using the third position 216, the second velocity v₃, or the second aircraft type T₂ to confirm that it is possible that the second aircraft 218 is located at the third position 216 moving at the second velocity v₃ at the second time t₃ includes determining that the second velocity v₃ is less than a maximum velocity of the second aircraft type. The computing system 100, prior to determining that the second velocity v₃ is less than the maximum velocity, can determine the maximum velocity based on the second aircraft type T₂ (*e.g.,* via a lookup table).

In some examples, the computing system 100 using the third position 216, the second velocity v₃, or the second aircraft type T₂ to confirm that it is possible that the second aircraft 218 is located at the third position 216 moving at the second velocity v₃ at the second time t₃ includes determining that the second velocity v₃ is greater than a minimum velocity of the second aircraft type T₂. The computing system 100, prior to determining that the second velocity v₃ is greater than the minimum velocity, can determine the minimum velocity based on the second aircraft type T₂ (*e.g.,* via a lookup table).

In some examples, using the third position 216, the second velocity v₃, or the second aircraft type T₂ to confirm that it is possible that the second aircraft 218 is located at the third position 216 moving at the second velocity v₃ at the second time t₃ includes determining that a distance 220 (*e.g.,* d₃) between the host aircraft 10 and the third position 216 is greater than a standard initial contact distance of ADS-B signals. That is, the computing system 100 determines whether it is reasonable that the first contact received via the ADS-B system from the second aircraft 218 occurred at the distance 220.

Figures 3-11 show flowcharts of the method 300, the method 313, the method 315, the method 317, the method 319, the method 321, the method 327, the method 329, and the method 331 for evaluating an ADS-B signal for authenticity, according to example implementations. The method 300, the method 313, the method 315, the method 317, the method 319, the method 321, the method 327, the method 329, and the method 331 present examples of methods that could be used with the computing system 100 shown in Figures 1-2. As shown in Figures 3-11, the method 300, the method 313, the method 315, the method 317, the method 319, the method 321, the method 327, the method 329, and the method 331 include one or more operations, functions, or actions as illustrated by blocks 302, 304, 306, 308, 310, 312, 314, 316, 318, 320, 322, 324, 326, 328, and 330. Although the blocks are illustrated in a sequential order, these blocks may also be performed in parallel, and/or in a different order than those described herein. Also, the various blocks may be combined into fewer blocks, divided into additional blocks, and/or removed based upon the desired implementation.

Referring to Figure 3, block 302 of the method 300 includes receiving, by the computing system 100, the first authenticated signal 202 that (i) identifies the first position 204 of the first aircraft 206 relative to the host aircraft 10 on which the computing system 100 is located and (ii) includes the first identifier U₁ of the first aircraft 206.

Block 304 of the method 300 includes receiving, at the subsequent time t₂, the second signal 208 that is an ADS-B signal that identifies the second position 210, the velocity v₂, and the aircraft type T₁. The second signal 208 includes the second identifier U₂.

Block 306 of the method 300 includes, based on matching the first identifier U₁ and the second identifier U₂ such that the second signal 208 corresponds to the first aircraft 206, using the first position 204 and the aircraft type T₁ to confirm that it is possible that the first aircraft 206 is located at the second position 210 moving at the velocity v₂ at the subsequent time t₂.

Block 308 of the method 300 includes, based on a confirmation that it is possible that the first aircraft 206 is located at the second position 210 moving at the velocity v₂ at the subsequent time t₂, providing (*e.g*., via the user interface 110) an indication that the second signal 208 is authentic.

Referring to Figure 4, block 310 of the method 313 includes, prior to determining that the second position 210 and the velocity v₂ conform to the flight plan, performing voice-to-text conversion of the first authenticated signal 202 to determine the flight plan.

Block 312 of the method 313 includes determining that the second position 210 and the velocity v₂ conform to the flight plan.

Referring to Figure 5, block 314 of the method 315 includes, prior to determining that the distance 212 is less than the maximum distance, determining the maximum velocity based on the aircraft type T₁.

Referring to Figure 6, block 316 of the method 317 includes, prior to determining that the distance 212 is more than the minimum distance, determining the minimum velocity based on the aircraft type T₁.

Referring to Figure 7, block 318 of the method 319 includes, prior to determining that the second position 210 represents the altitude a₂ that is less than the maximum altitude, determining the maximum altitude based on the aircraft type T₁.

Referring to Figure 8, block 320 of the method 321 includes receiving, at the second time t₃ that is subsequent to receiving the first authenticated signal 202, the third signal 214 that is an ADS-B signal that identifies the third position 216, the second velocity v₃, and the second aircraft type T₂. The third signal 214 includes a third identifier U₃.

Block 322 of the method 321 includes, based on finding a mismatch between the first identifier U₁ and the third identifier U₃ such that the third signal 214 corresponds to the second aircraft 218, using the third position 216, the second velocity v₃, or the second aircraft type T₂ to confirm that it is possible that the second aircraft 218 is located at the third position 216 moving at the second velocity v₃ at the second time t₃.

Block 324 of the method 321 includes, based on a confirmation that it is possible that the second aircraft 218 is located at the third position 216 moving at the second velocity v₃ at the second time t₃, providing (*e.g*., via the user interface 110) a second indication that the third signal 214 is authentic.

Referring to Figure 9, block 326 of the method 327 includes, prior to determining that the third position 216 represents the altitude a₃ that is less than the maximum altitude, determining the maximum altitude based on the second aircraft type T₂.

Referring to Figure 10, block 328 of the method 329 includes, prior to determining that the second velocity v₃ is less than the maximum velocity, determining the maximum velocity based on the second aircraft type T₂.

Referring to Figure 11, block 330 of the method 331 includes, prior to determining that the second velocity v₃ is greater than the minimum velocity, determining the minimum velocity based on the second aircraft type T₂.

## Claims

1. A computing system (100) for evaluating an Automatic Dependent Surveillance-Broadcast, ADS-B, signal for authenticity, the computing system comprising:
one or more processors (102); and
a computer readable medium (104) storing instructions (114) that, when executed by the one or more processors, cause the computing system to perform functions comprising:
receiving (302) a first authenticated signal (202) that (i) identifies a first position (204) of a first aircraft (206) relative to a host aircraft (10) on which the computing system is located and (ii) includes a first identifier (U₁) of the first aircraft;
receiving (304), at a subsequent time (t₂), a second signal (208) that is an ADS-B signal that identifies a second position (210), a velocity (v₂), and an aircraft type (T₁), wherein the second signal includes a second identifier (U₂);
based on matching the first identifier and the second identifier such that the second signal corresponds to the first aircraft, using (306) the first position and the aircraft type to confirm that it is possible that the first aircraft is located at the second position moving at the velocity at the subsequent time; and
based on a confirmation that it is possible that the first aircraft is located at the second position moving at the velocity at the subsequent time, providing (308) an indication that the second signal is authentic; wherein
the first authenticated signal is received at a first time (t₁), and wherein using (306) the first position and the aircraft type to confirm that it is possible that the first aircraft is located at the second position moving at the velocity at the subsequent time comprises:
determining (306) that a distance (212) between the first position and the second position is less than a maximum distance that the first aircraft could have travelled at a maximum velocity of the aircraft type between the first time and the subsequent time, the functions further comprising:
prior to determining that the distance is less than the maximum distance, determining (314) the maximum velocity based on the aircraft type.

2. The computing system of claim 1, wherein the first authenticated signal is a Traffic Collision Avoidance System, TCAS, signal, an air traffic control voice, ATCV, signal that encodes air traffic control audio, or a Controller Pilot Data Link, CPDL, signal.

3. The computing system of any of claims 1-2, wherein the first authenticated signal is an air traffic control voice, ATCV, signal or a Controller Pilot Data Link, CPDL, signal that indicates a flight plan of the first aircraft, the functions further comprising:
determining (312) that the second position and the velocity conform to the flight plan, and
wherein the first authenticated signal is an ATCV signal, the functions further comprising:
prior to determining that the second position and the velocity conform to the flight plan, performing (310) voice-to-text conversion of the first authenticated signal to determine the flight plan.

4. The computing system of any of claims 1-3, wherein the first authenticated signal is received via an encrypted channel

5. The computing system of any of claims 1-4, wherein the first authenticated signal is received at a first time, and wherein using (306) the first position and the aircraft type to confirm that it is possible that the first aircraft is located at the second position moving at the velocity at the subsequent time comprises:
determining (306) that a distance between the first position and the second position is more than a minimum distance that the first aircraft could have travelled at a minimum velocity of the aircraft type between the first time and the subsequent time, the functions further comprising:
prior to determining that the distance is more than the minimum distance, determining (316) the minimum velocity based on the aircraft type.

6. The computing system of any of claims 1-5, wherein using (306) the first position and the aircraft type to confirm that it is possible that the first aircraft is located at the second position moving at the velocity at the subsequent time further comprises:
determining (306) that the second position represents an altitude (a₂) that is less than a maximum altitude of the aircraft type, the functions further comprising:
prior to determining that the second position represents the altitude that is less than the maximum altitude, determining (318) the maximum altitude based on the aircraft type.

7. The computing system of any of claims 1-6, the functions further comprising:
receiving (320), at a second time (t₃) that is subsequent to receiving the first authenticated signal, a third signal (214) that is an ADS-B signal that identifies a third position (216), a second velocity (v₃), and a second aircraft type (T₂), wherein the third signal includes a third identifier (U₃);
based on finding a mismatch between the first identifier and the third identifier such that the third signal corresponds to a second aircraft (218), using (322) the third position, the second velocity, or the second aircraft type to determine whether the distance between the host aircraft (10) and the third position is greater than a standard initial contact distance of ADS-B signals so as to confirm whether it is possible that the second aircraft is located at the third position moving at the second velocity at the second time; and
based on a confirmation that it is possible that the second aircraft is located at the third position moving at the second velocity at the second time, providing (324) a second indication that the third signal is authentic.

8. The computing system of claim 7, wherein using (322) the third position, the second velocity, or the second aircraft type to confirm that it is possible that the second aircraft is located at the third position moving at the second velocity at the second time comprises:
determining (322) that the third position represents an altitude (a₃) that is less than a maximum altitude of the second aircraft type, the functions further comprising:
prior to determining that the third position represents the altitude that is less than the maximum altitude, determining (326) the maximum altitude based on the second aircraft type.

9. The computing system of claim 7, wherein using (322) the third position, the second velocity, or the second aircraft type to confirm that it is possible that the second aircraft is located at the third position moving at the second velocity at the second time comprises:
determining (322) that the second velocity is less than a maximum velocity of the second aircraft type, the functions further comprising:
prior to determining that the second velocity is less than the maximum velocity, determining (328) the maximum velocity based on the second aircraft type.

10. The computing system of claim 7, wherein using (322) the third position, the second velocity, or the second aircraft type to confirm that it is possible that the second aircraft is located at the third position moving at the second velocity at the second time comprises:
determining (322) that the second velocity is greater than a minimum velocity of the second aircraft type, the functions further comprising:
prior to determining that the second velocity is greater than the minimum velocity, determining (330) the minimum velocity based on the second aircraft type.

11. A method (300) for evaluating an Automatic Dependent Surveillance-Broadcast, ADS-B, signal for authenticity, the method comprising:
receiving (302), by a computing system (100), a first authenticated signal (202) that (i) identifies a first position (204) of a first aircraft (206) relative to a host aircraft (10) on which the computing system is located and (ii) includes a first identifier (U₁) of the first aircraft;
receiving (304), at a subsequent time (t₂), a second signal (208) that is an ADS-B signal that identifies a second position (210), a velocity (v₂), and an aircraft type (T₁), wherein the second signal includes a second identifier (U₂);
based on matching the first identifier and the second identifier such that the second signal corresponds to the first aircraft, using (306) the first position and the aircraft type to confirm that it is possible that the first aircraft is located at the second position moving at the velocity at the subsequent time; and
based on a confirmation that it is possible that the first aircraft is located at the second position moving at the velocity at the subsequent time, providing (308) an indication that the second signal is authentic; wherein
the first authenticated signal is received at a first time (t₁), and wherein using (306) the first position and the aircraft type to confirm that it is possible that the first aircraft is located at the second position moving at the velocity at the subsequent time comprises:
determining (306) that a distance (212) between the first position and the second position is less than a maximum distance that the first aircraft could have travelled at a maximum velocity of the aircraft type between the first time and the subsequent time, the functions further comprising:
prior to determining that the distance is less than the maximum distance, determining (314) the maximum velocity based on the aircraft type.

12. The method of claim 11, wherein the first authenticated signal is a Traffic Collision Avoidance System, TCAS, signal, an air traffic control voice, ATCV, signal that encodes air traffic control audio, or a Controller Pilot Data Link, CPDL, signal.

13. The method of any of claims 11-12, wherein the first authenticated signal is an air traffic control voice, ATCV, signal or a Controller Pilot Data Link, CPDL, signal that indicates a flight plan of the first aircraft, the functions further comprising:
determining (312) that the second position and the velocity conform to the flight plan, and
wherein the first authenticated signal is an ATCV signal, the functions further comprising:
prior to determining that the second position and the velocity conform to the flight plan, performing (310) voice-to-text conversion of the first authenticated signal to determine the flight plan.

14. The method of any of claims 11-13, wherein the first authenticated signal is received via an encrypted channel.

15. A non-transitory computer readable medium storing instructions that, when executed by a computing system, cause the computing system to perform all of the steps of the method of any of claims 11-14.

## Patentansprüche

1. Rechensystem (100) zum Bewerten eines Automatic-Dependent-Surveillance-Broadcast-(ADS-B)-Signals auf Authentizität, wobei das Rechensystem aufweist:
einen oder mehrere Prozessoren (102); und
ein computerlesbares Medium (104), auf dem Befehle (114) gespeichert sind, die, wenn sie von dem einen oder den mehreren Prozessoren ausgeführt werden, das Rechensystem veranlassen, Funktionen auszuführen, die aufweisen:
Empfangen (302) eines ersten authentifizierten Signals (202), das (i) eine erste Position (204) eines ersten Flugzeugs (206) relativ zu einem Host-Flugzeug (10) identifiziert, auf dem sich das Rechensystem befindet, und (ii) eine erste Kennung (U₁) des ersten Flugzeugs enthält;
Empfangen (304) zu einem nachfolgenden Zeitpunkt (t₂) eines zweiten Signals (208), das ein ADS-B-Signal ist, das eine zweite Position (210), eine Geschwindigkeit (v₂) und einen Flugzeugtyp (T₁) identifiziert, wobei das zweite Signal eine zweite Kennung (U₂) enthält;
basierend auf einem Abgleich der ersten Kennung mit der zweiten Kennung, so dass das zweite Signal dem ersten Flugzeug entspricht, Verwenden (306) der ersten Position und des Flugzeugtyps, um zu bestätigen, dass es möglich ist, dass sich das erste Flugzeug zu dem nachfolgenden Zeitpunkt an der zweiten Position befindet und sich mit der Geschwindigkeit bewegt; und
basierend auf einer Bestätigung, dass es möglich ist, dass sich das erste Flugzeug zu dem nachfolgenden Zeitpunkt an der zweiten Position befindet und sich mit der Geschwindigkeit bewegt, Bereitstellen (308) einer Anzeige, dass das zweite Signal authentisch ist; wobei
das erste authentifizierte Signal zu einem ersten Zeitpunkt (t1) empfangen wird, und wobei das Verwenden (306) der ersten Position und des Flugzeugtyps, um zu bestätigen, dass es möglich ist, dass sich das erste Flugzeug zu dem nachfolgenden Zeitpunkt an der zweiten Position befindet und sich mit der Geschwindigkeit bewegt, aufweist:
Bestimmen (306), dass eine Entfernung (212) zwischen der ersten Position und der zweiten Position kleiner ist als eine maximale Entfernung, die das erste Flugzeug bei einer maximalen Geschwindigkeit des Flugzeugtyps zwischen dem ersten Zeitpunkt und dem nachfolgenden Zeitpunkt zurückgelegt haben könnte, wobei die Funktionen ferner aufweisen:
vor dem Bestimmen, dass die Entfernung kleiner als die maximale Entfernung ist, Bestimmen (314) der maximalen Geschwindigkeit basierend auf dem Flugzeugtyp.

2. Rechensystem nach Anspruch 1, wobei das erste authentifizierte Signal ein Traffic-Collision-Avoidance-System-(TCAS)-Signal, ein Air-Traffic-Control-Voice-(ATCV)-Signal, das Flugsicherungs-Audio codiert, oder ein Controller-Pilot-Data-Link-(CPDL)-Signal ist.

3. Rechensystem nach einem der Ansprüche 1 bis 2, wobei das erste authentifizierte Signal ein Air-Traffic-Control-Voice-(ATCV)-Signal oder ein Controller-Pilot-Data-Link-(CPDL)-Signal ist, das einen Flugplan des ersten Flugzeugs anzeigt, wobei die Funktionen ferner aufweisen:
Bestimmen (312), dass die zweite Position und die Geschwindigkeit mit dem Flugplan übereinstimmen, und
wobei das erste authentifizierte Signal ein ATCV-Signal ist, wobei die Funktionen ferner aufweisen:
vor dem Bestimmen, dass die zweite Position und die Geschwindigkeit mit dem Flugplan übereinstimmen, Durchführen (310) einer Sprach-zu-Text-Umwandlung des ersten authentifizierten Signals, um den Flugplan zu bestimmen.

4. Rechensystem nach einem der Ansprüche 1 bis 3, wobei das erste authentifizierte Signal über einen verschlüsselten Kanal empfangen wird.

5. Rechensystem nach einem der Ansprüche 1 bis 4, wobei das erste authentifizierte Signal zu einem ersten Zeitpunkt empfangen wird und wobei das Verwenden (306) der ersten Position und des Flugzeugtyps, um zu bestätigen, dass es möglich ist, dass sich das erste Flugzeug zu dem nachfolgenden Zeitpunkt an der zweiten Position befindet und sich mit der Geschwindigkeit bewegt, aufweist:
Bestimmen (306), dass eine Entfernung zwischen der ersten Position und der zweiten Position größer ist als eine minimale Entfernung, den das erste Flugzeug bei einer minimalen Geschwindigkeit des Flugzeugtyps zwischen dem ersten Zeitpunkt und dem nachfolgenden Zeitpunkt hätte zurücklegen können, wobei die Funktionen ferner aufweisen:
vor dem Bestimmen, dass die Entfernung größer als die minimale Entfernung ist, Bestimmen (316) der minimalen Geschwindigkeit basierend auf dem Flugzeugtyp.

6. Rechensystem nach einem der Ansprüche 1 bis 5, wobei das Verwenden (306) der ersten Position und des Flugzeugtyps, um zu bestätigen, dass es möglich ist, dass sich das erste Flugzeug zu dem nachfolgenden Zeitpunkt an der zweiten Position befindet und sich mit der Geschwindigkeit bewegt, ferner aufweist:
Bestimmen (306), dass die zweite Position eine Höhe (a₂) repräsentiert, die kleiner ist als eine maximale Höhe des Flugzeugtyps, wobei die Funktionen ferner aufweisen:
vor dem Bestimmen, dass die zweite Position die Höhe repräsentiert, die kleiner als die maximale Höhe ist, Bestimmen (318) der maximalen Höhe basierend auf dem Flugzeugtyp.

7. Rechensystem nach einem der Ansprüche 1 bis 6, wobei die Funktionen ferner aufweisen:
Empfangen (320) zu einem zweiten Zeitpunkt (t₃), der auf den Empfang des ersten authentifizierten Signals folgt, eines dritten Signals (214), das ein ADS-B-Signal ist, das eine dritte Position (216), eine zweite Geschwindigkeit (v₃) und einen zweiten Flugzeugtyp (T₂) identifiziert, wobei das dritte Signal eine dritte Kennung (U₃) enthält;
basierend auf einem Ermitteln einer Diskrepanz zwischen der ersten Kennung und der dritten Kennung, so dass das dritte Signal einem zweiten Flugzeug (218) entspricht, Verwenden (322) der dritten Position, der zweiten Geschwindigkeit oder des zweiten Flugzeugtyps, um zu bestimmen, ob die Entfernung zwischen dem Host-Flugzeug (10) und der dritten Position größer ist als eine Standardanfangs-Kontaktentfernung von ADS-B-Signalen, um zu bestätigen, ob es möglich ist, dass sich das zweite Flugzeug zu dem zweiten Zeitpunkt an der dritten Position befindet und sich mit der zweiten Geschwindigkeit bewegt; und
basierend auf einer Bestätigung, dass es möglich ist, dass sich das zweite Flugzeug zu dem zweiten Zeitpunkt an der dritten Position befindet und sich mit der zweiten Geschwindigkeit bewegt, Bereitstellen (324) einer zweiten Anzeige, dass das dritte Signal authentisch ist.

8. Rechensystem nach Anspruch 7, wobei das Verwenden (322) der dritten Position, der zweiten Geschwindigkeit oder des zweiten Flugzeugtyps, um zu bestätigen, dass es möglich ist, dass sich das zweite Flugzeug zu dem zweiten Zeitpunkt an der dritten Position befindet und sich mit der zweiten Geschwindigkeit bewegt, aufweist:
Bestimmen (322), dass die dritte Position eine Höhe (a₃) repräsentiert, die kleiner ist als eine maximale Höhe des zweiten Flugzeugtyps, wobei die Funktionen ferner aufweisen:
vor dem Bestimmen, dass die dritte Position die Höhe repräsentiert, die kleiner als die maximale Höhe ist, Bestimmen (326) der maximalen Höhe basierend auf dem zweiten Flugzeugtyp.

9. Rechensystem nach Anspruch 7, wobei das Verwenden (322) der dritten Position, der zweiten Geschwindigkeit oder des zweiten Flugzeugtyps, um zu bestätigen, dass es möglich ist, dass sich das zweite Flugzeug zu dem zweiten Zeitpunkt an der dritten Position befindet und sich mit der zweiten Geschwindigkeit bewegt, aufweist:
Bestimmen (322), dass die zweite Geschwindigkeit kleiner ist als eine maximale Geschwindigkeit des zweiten Flugzeugtyps, wobei die Funktionen ferner aufweisen:
vor dem Bestimmen, dass die zweite Geschwindigkeit kleiner als die maximale Geschwindigkeit ist, Bestimmen (328) der maximalen Geschwindigkeit basierend auf dem zweiten Flugzeugtyp.

10. Rechensystem nach Anspruch 7, wobei das Verwenden (322) der dritten Position, der zweiten Geschwindigkeit oder des zweiten Flugzeugtyps, um zu bestätigen, dass es möglich ist, dass sich das zweite Flugzeug zu dem zweiten Zeitpunkt an der dritten Position befindet und sich mit der zweiten Geschwindigkeit bewegt, aufweist:
Bestimmen (322), dass die zweite Geschwindigkeit größer ist als eine minimale Geschwindigkeit des zweiten Flugzeugtyps, wobei die Funktionen ferner aufweisen:
vor dem Bestimmen, dass die zweite Geschwindigkeit größer ist als die minimale Geschwindigkeit, Bestimmen (330) der minimalen Geschwindigkeit basierend auf dem zweiten Flugzeugtyp.

11. Verfahren (300) zum Bewerten eines Automatic-Dependent-Surveillance-Broadcast-(ADS-B)-Signals auf Authentizität, wobei das Verfahren aufweist:
Empfangen (302) durch ein Rechensystem (100), eines ersten authentifizierten Signals (202), das (i) eine erste Position (204) eines ersten Flugzeugs (206) relativ zu einem Host-Flugzeug (10) identifiziert, auf dem sich das Rechensystem befindet, und (ii) eine erste Kennung (U₁) des ersten Flugzeugs enthält;
Empfangen (304) zu einem nachfolgenden Zeitpunkt (t₂) eines zweiten Signals (208), das ein ADS-B-Signal ist, das eine zweite Position (210), eine Geschwindigkeit (v₂) und einen Flugzeugtyp (T₁) identifiziert, wobei das zweite Signal eine zweite Kennung (U₂) enthält;
basierend auf einem Abgleich der ersten Kennung mit der zweiten Kennung, so dass das zweite Signal dem ersten Flugzeug entspricht, Verwenden (306) der ersten Position und des Flugzeugtyps, um zu bestätigen, dass es möglich ist, dass sich das erste Flugzeug zu dem nachfolgenden Zeitpunkt an der zweiten Position befindet und sich mit der Geschwindigkeit bewegt; und
basierend auf einer Bestätigung, dass es möglich ist, dass sich das erste Flugzeug zu dem nachfolgenden Zeitpunkt an der zweiten Position befindet und sich mit der Geschwindigkeit bewegt, Bereitstellen (308) einer Anzeige, dass das zweite Signal authentisch ist; wobei
das erste authentifizierte Signal zu einem ersten Zeitpunkt (t₁) empfangen wird, und wobei das Verwenden (306) der ersten Position und des Flugzeugtyps, um zu bestätigen, dass es möglich ist, dass sich das erste Flugzeug zu dem nachfolgenden Zeitpunkt an der zweiten Position befindet und sich mit der Geschwindigkeit bewegt, aufweist:
Bestimmen (306), dass eine Entfernung (212) zwischen der ersten Position und der zweiten Position kleiner ist als eine maximale Entfernung, die das erste Flugzeug bei einer maximalen Geschwindigkeit des Flugzeugtyps zwischen dem ersten Zeitpunkt und dem nachfolgenden Zeitpunkt zurückgelegt haben könnte, wobei die Funktionen ferner aufweisen:
vor dem Bestimmen, dass die Entfernung kleiner als die maximale Entfernung ist, Bestimmen (314) der maximalen Geschwindigkeit basierend auf dem Flugzeugtyp.

12. Verfahren nach Anspruch 11, wobei das erste authentifizierte Signal ein Traffic-Collision-Avoidance-System-(TCAS)-Signal, ein Air-Traffic-Control-Voice-(ATCV)-Signal, das Flugsicherungs-Audio codiert, oder ein Controller-Pilot-Data-Link-(CPDL)-Signal ist.

13. Verfahren nach einem der Ansprüche 11 bis 12, wobei das erste authentifizierte Signal ein Air-Traffic-Control-Voice-(ATCV)-Signal oder ein Controller-Pilot-Data-Link-(CPDL)-Signal ist, das einen Flugplan des ersten Flugzeugs anzeigt, wobei die Funktionen ferner aufweisen:
Bestimmen (312), dass die zweite Position und die Geschwindigkeit mit dem Flugplan übereinstimmen, und
wobei das erste authentifizierte Signal ein ATCV-Signal ist, wobei die Funktionen ferner aufweisen:
vor dem Bestimmen, dass die zweite Position und die Geschwindigkeit mit dem Flugplan übereinstimmen, Durchführen (310) einer Sprach-zu-Text-Umwandlung des ersten authentifizierten Signals, um den Flugplan zu bestimmen.

14. Verfahren nach einem der Ansprüche 11 bis 13, wobei das erste authentifizierte Signal über einen verschlüsselten Kanal empfangen wird.

15. Nichtflüchtiges, computerlesbares Medium, auf dem Befehle gespeichert sind, die, wenn sie von einem Rechensystem ausgeführt werden, das Rechensystem veranlassen, alle Schritte des Verfahrens nach einem der Ansprüche 11 bis 14 auszuführen.

## Revendications

1. Système informatique (100) pour évaluer un signal de surveillance dépendante automatique en mode diffusion, ADS-B, pour l'authenticité, le système informatique comprenant :
un ou plusieurs processeurs (102) ; et
un support lisible par ordinateur (104) stockant des instructions (114) qui, lorsqu'elles sont exécutées par les un ou plusieurs processeurs, amènent le système informatique à réaliser des fonctions comprenant :
la réception (302) d'un premier signal authentifié (202) qui (i) identifie une première position (204) d'un premier aéronef (206) par rapport à un aéronef hôte (10) sur lequel le système informatique est situé et (ii) comporte un premier identifiant (U₁) du premier aéronef ;
la réception (304), à un moment ultérieur (t₂), d'un deuxième signal (208) qui est un signal ADS-B qui identifie une deuxième position (210), une vitesse (v₂) et un type d'aéronef (T₁), dans lequel le deuxième signal comporte un deuxième identifiant (U₂) ; sur la base d'une mise en correspondance du premier identifiant et du deuxième identifiant de sorte que le deuxième signal corresponde au premier aéronef, l'utilisation (306) de la première position et du type d'aéronef pour confirmer qu'il est possible que le premier aéronef soit situé à la deuxième position en se déplaçant à la vitesse au moment ultérieur ; et
sur la base d'une confirmation qu'il est possible que le premier aéronef soit situé à la deuxième position en se déplaçant à la vitesse au moment ultérieur, la fourniture (308) d'une indication que le deuxième signal est authentique ; dans lequel
le premier signal authentifié est reçu à un premier moment (t₁), et dans lequel l'utilisation (306) de la première position et du type d'aéronef pour confirmer qu'il est possible que le premier aéronef soit situé à la deuxième position en se déplaçant à la vitesse au moment ultérieur comprend :
la détermination (306) qu'une distance (212) entre la première position et la deuxième position est inférieure à une distance maximale que le premier aéronef aurait pu parcourir à une vitesse maximale du type d'aéronef entre le premier moment et le moment ultérieur, les fonctions comprenant en outre :
avant de déterminer que la distance est inférieure à la distance maximale, la détermination (314) de la vitesse maximale sur la base du type d'aéronef.

2. Système informatique selon la revendication 1, dans lequel le premier signal authentifié est un signal d'alerte de trafic et d'évitement de collision, TCAS, un signal vocal de contrôle de trafic aérien, ATCV, qui code l'audio de contrôle de trafic aérien, ou un signal contrôleur-pilote par liaison de données, CPDL.

3. Système informatique selon l'une quelconque des revendications 1 et 2, dans lequel le premier signal authentifié est un signal vocal de contrôle de trafic aérien, ATCV, ou un signal contrôleur-pilote par liaison de données, CPDL, qui indique un plan de vol du premier aéronef, les fonctions comprenant en outre :
la détermination (312) que la deuxième position et la vitesse sont conformes au plan de vol, et
dans lequel le premier signal authentifié est un signal ATCV, les fonctions comprenant en outre :
avant de déterminer que la deuxième position et la vitesse sont conformes au plan de vol, la réalisation (310) d'une conversion voix-texte du premier signal authentifié pour déterminer le plan de vol.

4. Système informatique selon l'une quelconque des revendications 1 à 3, dans lequel le premier signal authentifié est reçu via un canal chiffré.

5. Système informatique selon l'une quelconque des revendications 1 à 4, dans lequel le premier signal authentifié est reçu à un premier moment, et dans lequel l'utilisation (306) de la première position et du type d'aéronef pour confirmer qu'il est possible que le premier aéronef soit situé à la deuxième position en se déplaçant à la vitesse au moment ultérieur comprend :
la détermination (306) qu'une distance entre la première position et la deuxième position est supérieure à une distance minimale que le premier aéronef aurait pu parcourir à une vitesse minimale du type d'aéronef entre le premier moment et le moment ultérieur, les fonctions comprenant en outre :
avant de déterminer que la distance est supérieure à la distance minimale, la détermination (316) de la vitesse minimale sur la base du type d'aéronef.

6. Système informatique selon l'une quelconque des revendications 1 à 5, dans lequel l'utilisation (306) de la première position et du type d'aéronef pour confirmer qu'il est possible que le premier aéronef soit situé à la deuxième position en se déplaçant à la vitesse au moment ultérieur comprend en outre :
la détermination (306) que la deuxième position représente une altitude (a₂) qui est inférieure à une altitude maximale du type d'aéronef, les fonctions comprenant en outre :
avant de déterminer que la deuxième position représente l'altitude qui est inférieure à l'altitude maximale, la détermination (318) de l'altitude maximale sur la base du type d'aéronef.

7. Système informatique selon l'une quelconque des revendications 1 à 6, les fonctions comprenant en outre :
la réception (320), à un second moment (t₃) qui est ultérieur à la réception du premier signal authentifié, d'un troisième signal (214) qui est un signal ADS-B qui identifie une troisième position (216), une seconde vitesse (v₃) et un second type d'aéronef (T₂), dans lequel le troisième signal comporte un troisième identifiant (U₃) ;
sur la base de la recherche d'une non-correspondance entre le premier identifiant et le troisième identifiant de sorte que le troisième signal corresponde à un second aéronef (218), l'utilisation (322) de la troisième position, de la seconde vitesse ou du second type d'aéronef pour déterminer si la distance entre l'aéronef hôte (10) et la troisième position est supérieure à une distance de contact initiale standard de signaux ADS-B de manière à confirmer s'il est possible que le second aéronef soit situé à la troisième position en se déplaçant à la seconde vitesse au second moment ; et
sur la base d'une confirmation qu'il est possible que le second aéronef soit situé à la troisième position en se déplaçant à la seconde vitesse au second moment, la fourniture (324) d'une seconde indication que le troisième signal est authentique.

8. Système informatique selon la revendication 7, dans lequel l'utilisation (322) de la troisième position, de la seconde vitesse ou du second type d'aéronef pour confirmer qu'il est possible que le second aéronef soit situé à la troisième position en se déplaçant à la seconde vitesse au second moment comprend :
la détermination (322) que la troisième position représente une altitude (a₃) qui est inférieure à une altitude maximale du second type d'aéronef, les fonctions comprenant en outre :
avant de déterminer que la troisième position représente l'altitude qui est inférieure à l'altitude maximale, la détermination (326) de l'altitude maximale sur la base du second type d'aéronef.

9. Système informatique selon la revendication 7, dans lequel l'utilisation (322) de la troisième position, de la seconde vitesse ou du second type d'aéronef pour confirmer qu'il est possible que le second aéronef soit situé à la troisième position en se déplaçant à la seconde vitesse au second moment comprend :
la détermination (322) que la seconde vitesse est inférieure à une vitesse maximale du second type d'aéronef, les fonctions comprenant en outre :
avant de déterminer que la seconde vitesse est inférieure à la vitesse maximale, la détermination (328) de la vitesse maximale sur la base du second type d'aéronef.

10. Système informatique selon la revendication 7, dans lequel l'utilisation (322) de la troisième position, de la seconde vitesse ou du second type d'aéronef pour confirmer qu'il est possible que le second aéronef soit situé à la troisième position en se déplaçant à la seconde vitesse au second moment comprend :
la détermination (322) que la seconde vitesse est supérieure à une vitesse minimale du second type d'aéronef, les fonctions comprenant en outre :
avant de déterminer que la seconde vitesse est supérieure à la vitesse minimale, la détermination (330) de la vitesse minimale sur la base du second type d'aéronef.

11. Procédé (300) pour évaluer un signal de surveillance dépendante automatique en mode diffusion, ADS-B, pour l'authenticité, le procédé comprenant :
la réception (302), par un système informatique (100), d'un premier signal authentifié (202) qui (i) identifie une première position (204) d'un premier aéronef (206) par rapport à un aéronef hôte (10) sur lequel le système informatique est situé et (ii) comporte un premier identifiant (U₁) du premier aéronef ;
la réception (304), à un moment ultérieur (t₂), d'un deuxième signal (208) qui est un signal ADS-B qui identifie une deuxième position (210), une vitesse (v₂) et un type d'aéronef (T₁), dans lequel le deuxième signal comporte un deuxième identifiant (U₂) ; sur la base d'une mise en correspondance du premier identifiant et du deuxième identifiant de sorte que le deuxième signal corresponde au premier aéronef, l'utilisation (306) de la première position et du type d'aéronef pour confirmer qu'il est possible que le premier aéronef soit situé à la deuxième position en se déplaçant à la vitesse au moment ultérieur ; et
sur la base d'une confirmation qu'il est possible que le premier aéronef soit situé à la deuxième position en se déplaçant à la vitesse au moment ultérieur, la fourniture (308) d'une indication que le deuxième signal est authentique ; dans lequel le premier signal authentifié est reçu à un premier moment (t₁), et dans lequel l'utilisation (306) de la première position et du type d'aéronef pour confirmer qu'il est possible que le premier aéronef soit situé à la deuxième position en se déplaçant à la vitesse au moment ultérieur comprend :
la détermination (306) qu'une distance (212) entre la première position et la deuxième position est inférieure à une distance maximale que le premier aéronef aurait pu parcourir à une vitesse maximale du type d'aéronef entre le premier moment et le moment ultérieur, les fonctions comprenant en outre :
avant de déterminer que la distance est inférieure à la distance maximale, la détermination (314) de la vitesse maximale sur la base du type d'aéronef.

12. Procédé selon la revendication 11, dans lequel le premier signal authentifié est un signal d'alerte de trafic et d'évitement de collision, TCAS, un signal vocal de contrôle de trafic aérien, ATCV, qui code l'audio de contrôle de trafic aérien, ou un signal contrôleur-pilote par liaison de données, CPDL.

13. Procédé selon l'une quelconque des revendications 11 et 12, dans lequel le premier signal authentifié est un signal vocal de contrôle de trafic aérien, ATCV, ou un signal contrôleur-pilote par liaison de données, CPDL, qui indique un plan de vol du premier aéronef, les fonctions comprenant en outre :
la détermination (312) que la deuxième position et la vitesse sont conformes au plan de vol, et
dans lequel le premier signal authentifié est un signal ATCV, les fonctions comprenant en outre :
avant de déterminer que la deuxième position et la vitesse sont conformes au plan de vol, la réalisation (310) d'une conversion voix-texte du premier signal authentifié pour déterminer le plan de vol.

14. Procédé selon l'une quelconque des revendications 11 à 13, dans lequel le premier signal authentifié est reçu via un canal chiffré.

15. Support non transitoire lisible par ordinateur stockant des instructions qui, lorsqu'elles sont exécutées par un système informatique, amènent le système informatique à réaliser toutes les étapes du procédé selon l'une quelconque des revendications 11 à 14.
